# EUROPÄISCHE PATENTANMELDUNG

(11) **EP 1 282 274 A2**
(43) Veröffentlichungstag der Anmeldung: **05.02.2003**
(21) Anmeldenummer: 02017402.5
(22) Anmeldetag: 02.08.2002
(51) Int. Cl.: H04L 12/413

(54) **Teilnehmer für ein synchrones Master-Slave Netzwerk**

(30) Priorität: 03.08.2001 DE 10138066
(71) Anmelder: SIEMENS AKTIENGESELLSCHAFT, 80333 München (DE)
(72) Erfinder: Katzenberger, Otmar, 76534 Baden Baden (DE); Mensinger, Jörg, 76149 Karlsruhe (DE)

(57) **Zusammenfassung**

Teilnehmer für ein Netzwerk mit zyklischer Datenübertragung, der einen Kommunikationsprozessor (10) aufweist. Während eines zyklischen Teils (ZYK,x) eines Zyklus (Z,x) in welchem Nutzdaten übertragen werden, darf eine DP-Anwendung nicht auf den Speicher (14, 15), in welchem in dem Kommunikationsprozessor (10) ein Prozessabbild gehalten wird, zugreifen. Zur Erkennung und Anzeige von Zugriffen ohne Zugriffsberechtigung ist eine Überwachungseinrichtung (19) vorgesehen, die anhand der zeitlichen Lage des Beginns und des Endes eines Zugriffs innerhalb der Zyklen Zugriffsverletzungen feststellt. Zusätzlich ist eine Anzeige einer schlechten Qualität der Zugriffssynchronisation möglich.

## Beschreibung

Die Erfindung betrifft einen Teilnehmer für ein Netzwerk nach dem Oberbegriff des Anspruchs 1.

Bei der Kommunikation in einem Netzwerk nach der PROFIBUS-DP-Spezifikation gibt es die Möglichkeit, Nutzdaten zwischen Master und Slaves in äquidistanten Zyklen zu übertragen. Als Master wird dabei derjenige Netzwerkteilnehmer bezeichnet, der Inhaber des Buszugriffsrechts ist und andere Teilnehmer, die Slaves, nacheinander nach Art eines Polling zur Datenübertragung aufruft. Im Äquidistanzbetrieb findet die Übertragung der Nutzdaten zwischen dem Master und den Slaves in exakt gleichen, d.h. äquidistanten Zyklen statt. Die Dauer eines Zyklus kann dabei durch Projektierung vorgegeben werden und beträgt typischerweise einige Millisekunden. Im Äquidistanzbetrieb wird somit eine hohe zeitliche Synchronität am Bus zwischen Master und den zugeordneten Slaves erreicht, die insbesondere für taktsynchrone Antriebskopplungen im Bereich der Bewegungssteuerung benötigt wird.

Aus dem Siemens-Handbuch "SIMATIC NET - Programmierschnittstelle DP-Base für CP 5613/CP 5614", Ausgabe 05/2000, Bestell-Nr. C79000-G8900-C139-04, ist ein Kommunikationsprozessor (CP) bekannt, der als Steckkarte in einen Personal Computer (PC) mit PCI-Bus gesteckt werden kann. Er ist als Master in einem Netzwerk nach PROFIBUS-DP-Spezifikation im Äquidistanzmodus betreibbar. Dabei läuft das Programm einer DP-Anwendung auf dem PC, während der CP mit seinem integrierten Mikroprozessor die Kommunikation über den Feldbus abwickelt. Als Schnittstelle zwischen der auf dem PC ablaufenden DP-Anwendung und dem Kommunikationsprozessor dient ein Dual-Port-RAM (DPR) das auf der Steckbaugruppe des Kommunikationsprozessors angeordnet und somit in diesen integriert ist. In diesem DPR wird quasi ein Prozessabbild gehalten.

Darin sind vor allem die Eingabe, Ausgabe und Diagnosedaten der Slaves enthalten, aber auch Zustands- und Konfigurationsdaten. Wenn die DP-Anwendung z.B. gerade Daten eines Slaves aus dem Prozessabbild liest und im gleichen Augenblick der Kommunikationsprozessor diese mit neuen Daten überschreibt, könnte die DP-Anwendung die ersten Bytes des Datensatzes vom vorigen DP-Zyklus und die letzten Bytes vom aktuellen Zyklus erhalten. Damit wären die Daten verfälscht und inkonsistent. Die Regeln für Äquidistanzbetrieb, z.B. in taktsynchronen Antriebskopplungen, schreiben daher vor, dass nur in denjenigen Zeitabschnitten eines Zyklus, in denen keine Nutzdaten zwischen Master und Slaves übertragen werden, die DP-Anwendung die Ist-Wert-Erfassung der Slaves oder die Soll-Wert-Vorgabe an die Slaves durchführen darf.

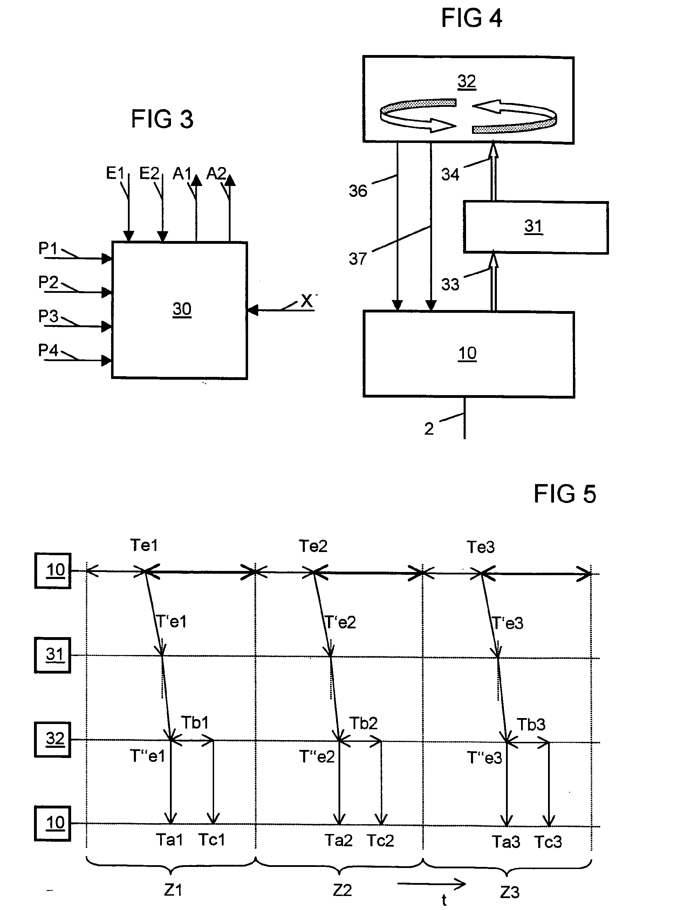

Figur 2 zeigt eine vereinfachte Darstellung eines Zyklus nach der PROFIBUS-DP-Spezifikation im Äquidistanzbetrieb. Eine Zeitachse t verläuft dabei von links nach rechts. Zur gemeinsamen Synchronisation der Slaves wird jeweils vor Beginn eines Äquidistanzzyklus Z,x ein Global Control Telegramm GC,x-1 gesendet. Der Zyklus Z,x beginnt mit einem zyklischen Teil ZYK,x, in welchem die Nutzdaten zwischen Master und Slaves ausgetauscht werden. Beginn und Ende des zyklischen Teils ZYK,x können der DP-Anwendung in einem PC durch Ausgabe eines Zyklus-Start-Interrupts ZSI,x bzw. eines Zyklus-Ende-Interrupts ZEI,x angezeigt werden. Nach Ablauf des zyklischen Teils ZYK,x folgt ein azyklischer Teil AZYK,x des Äquidistanzzyklus Z,x. Nach dem Ende des azyklischen Teils AZYK,x wird wiederum ein Global Control Telegramm GC,x zur Synchronisation der Slaves vor Beginn des nächsten Äquidistanzzyklus Z,x+1 gesendet. Der Beginn eines zyklischen Teils ZYK,x+1 im nicht mehr vollständig dargestellten Äquidistanzzyklus Z,x+1 kann wiederum mit einem Zyklus-Start-Interrupt ZSI,x+1 der DP-Anwendung im PC mitgeteilt werden. Die Dauer TDP eines Zyklus im Äquidistanzbetrieb ergibt sich somit als der zeitliche Abstand zwischen dem Zyklus-Start-Interrupt ZSI,x und dem darauf folgenden Zyklus-Start-Interrupt ZSI,x+1. Diese kann bei der Projektierung des Netzwerkes eingestellt werden. In einem Zeitabschnitt TDPR, der sich aus dem azyklischen Teil AZYK,x und der Sendezeit des Global Control Telegramms GC,x zusammensetzt, kann die DP-Anwendung im PC auf das Dual-Port-RAM des Kommunikationsprozessors zugreifen, ohne dass die Konsistenz der Datensätze des Prozessabbilds gefährdet wäre.

Die Synchronisation zwischen einem Thread auf dem PC, welcher die DP-Anwendung ausführt, im Folgenden DP-Bearbeitungs-Thread genannt, und dem Kommunikationsprozessor kann somit interruptgesteuert über einen in das Betriebssystem, z.B. Windows NT, integrierten Gerätetreiber erfolgen. Hierbei sendet der Kommunikationsprozessor in jedem Zyklus Z,i, i = ...x-1,x,x+1..., einen Zyklus-Start-Interrupt ZSI,i und einen Zyklus-Ende-Interrupt ZEI,i an den Treiber. Über Mechanismen des Betriebssystems, z.B. Weiterschalten einer Windows-Semaphore, aktiviert danach der Treiber den an der Semaphore wartenden DP-Bearbeitungs-Thread der DP-Anwendung. Bedingt durch eine Vielzahl von Betriebssystem- und Rechnereigenschaften, wie z.B. CPU-Geschwindigkeit, Zahl der installierten Steckkarten, Verdrängungseffekte durch Taskwechsel und Prioritätsschema, konkurrierender Betrieb mehrerer Treiber usw., ist die Zeit zwischen Generierung der Interrupts und der Aktivierung des DP-Bearbeitungs-Thread in vielen Fällen nicht deterministisch. Als Folge davon kann die Aktivierung der DP-Anwendung ständig oder sporadisch derart verzögert werden, dass der Zugriff auf das Prozessabbild im Kommunikationsprozessor zu einem nicht erlaubten Zeitpunkt erfolgt. Als Folge einer derartigen Zugriffsverletzung werden die Daten des Prozessabbilds in regelungstechnischer Hinsicht in einem falschen Zeitpunkt gelesen und aktualisiert. Es können schwerwiegende Betriebsstörungen oder Schäden an einer prozesstechnischen Anlage entstehen, die durch die Feldbuskomponenten des PROFIBUS-DP-Netzwerks gesteuert wird. Müssen sich beispielsweise in einem Walzwerk bei der Verarbeitung von Stahl alle Walzen absolut synchron bewegen, so könnte eine falsche Regelung zu einer ungleichmäßigen Stärke des gewalzten Stahls führen.

Der Erfindung liegt die Aufgabe zugrunde, einen Teilnehmer für ein Netzwerk zu schaffen, durch welchen derartige Zugriffsverletzungen während des Betriebs erkannt und angezeigt werden, damit geeignete Maßnahmen zur Fehlerbehandlung eingeleitet werden können.

Zur Lösung dieser Aufgabe weist der neue Teilnehmer der eingangs genannten Art die im kennzeichnenden Teil des Anspruchs 1 angegebenen Merkmale auf. In den abhängigen Ansprüchen sind vorteilhafte Weiterbildungen der Erfindung beschrieben.

Die Erfindung hat den Vorteil, dass Zugriffsverletzungen durch die Überwachungseinrichtung sicher und in Echtzeit erkannt werden können. Als Möglichkeiten zur Anzeige eines Zugriffs ohne Zugriffsberechtigung seien eine entsprechende Ausgabe einer Meldung auf einem Bediengerät oder die Erzeugung einer Meldung an eine Fehlerbehandlungsroutine in der Recheneinheit oder dem Kommunikationsprozessor genannt, damit ein gesteuerter Prozess in einen Sicherheitszustand gefahren werden kann. Insbesondere während eines Probelaufs in der Entwicklungsphase können nach Erkennen einer derartigen Zugriffsverletzung geeignete Maßnahmen getroffen werden. Beispielsweise kann eine schnellere CPU im PC eingesetzt, eine Optimierung im BIOS des Betriebssystems oder eine Erhöhung der projektierten Äquidistanzzeit vorgenommen werden. Da ein Entstehen inkonsistenter Datensätze in einer DP-Anwendung bereits an der Fehlerquelle erkannt wird, können frühzeitig geeignete Maßnahmen zur Fehlerbehandlung eingeleitet und evtl. dadurch verursachte Betriebsstörungen oder Schäden an einer prozesstechnischen Anlage vermieden werden.

Die Überwachungseinrichtung wird vorzugsweise als Hardware in Form einer elektronischen Schaltung und nicht als Software realisiert. Eine Softwarerealisierung der Überwachungseinrichtung würde einen relativ hohen Rechenaufwand erfordern, der die Funktion des Kommunikationsprozessors beeinträchtigen könnte. Eine durch Hardware realisierte Überwachungseinrichtung kann dagegen unabhängig von der Programmbearbeitung eines Mikroprozessors, der üblicherweise in Kommunikationsprozessoren Verwendung findet, Zugriffsverletzungen in Echtzeit und sicher erkennen.

Zudem sind exakte Messungen der zeitlichen Lage von Zugriffen innerhalb der Zyklen möglich, die eine deterministische Aussage über die Qualität der Zugriffssynchronisation erlauben. Anhand dieser Messungen kann somit zusätzlich erkannt werden, ob eine vorgegebene Mindestqualität unterschritten worden ist. Anhand des Beginns und des Endes eines Zugriffs der Recheneinheit auf den Speicher ist eine zuverlässige Aussage darüber möglich, ob der Zugriff auf den Speicher tatsächlich teilweise oder vollständig außerhalb des azyklischen Teils des äquidistanten Zyklus liegt.

Der feste Zeitpunkt, zu welchem der Kommunikationsprozessor ein erstes Synchronisationssignal an die Recheneinheit sendet, kann prinzipiell beliebig innerhalb des Zyklus gewählt werden. Anhand der bekannten Lage innerhalb des Zyklus und der Zyklusdauer kann die Recheneinheit ermitteln, wann der azyklische Teil eines Zyklus beginnt und Zugriffe auf den Speicher zulässig sind. Die Zeitüberwachung wird jedoch in vorteilhafter Weise vereinfacht, wenn der Kommunikationsprozessor das erste Synchronisationssignal durch Ausgabe eines Interrupts an die Recheneinheit zum Ende des zyklischen Teils eines Zyklus, das gleichzeitig dem Beginn des azyklischen Teils des Zyklus entspricht, sendet. Der Empfang des Synchronisationssignals hat dann für die Recheneinheit die Bedeutung, dass sie ab diesem Zeitpunkt auf den Speicher zugreifen kann. Die Ausgabe eines Interrupts als erstes Synchronisationssignal stellt dabei ein erprobtes Mittel zur ereignisgesteuerten Bearbeitung programmtechnisch realisierter Abläufe dar.

Wenn die Recheneinheit der Überwachungseinrichtung den Beginn eines Zugriffs auf den Speicher durch ein zweites Signal, insbesondere durch Setzen eines Start-Flags, und das Ende eines Zugriffs auf den Speicher durch ein drittes Signal, insbesondere durch Setzen eines Ende-Flags, anzeigt, so hat dies den Vorteil, dass keine aufwendige Erkennung von Zugriffen der Recheneinheit durch die Überwachungseinrichtung, beispielsweise durch Auswerten der Adressen, auf welche die Recheneinheit zugreift, und Vergleich der Zugriffsadressen mit den Adressen des Speichers, erforderlich ist. Dadurch wird der schaltungstechnische Aufwand zur Realisierung der Überwachungseinrichtung verringert.

Die Überwachungseinrichtung kann derart gestaltet werden, dass sie durch Vorgabe eines Parameters einstellbar ist, der die zulässige Zahl der Zyklen bestimmt, die zwischen Senden des ersten Synchronisationssignals und dem ersten darauf folgenden Zugriff der Recheneinheit auf den Speicher liegen darf. Ein Signal zur Anzeige eines Fehlers wird dann erzeugt, wenn diese Zahl durch eine während des Betriebs ermittelte Zahl überschritten wird. Das hat den Vorteil, dass Synchronisationsfehler erkannt werden, die möglicherweise entstehen, wenn die Recheneinheit beispielsweise in Folge von Laufzeitoder Überlasteffekten der DP-Anwendung mehr als eine vorgegebene Zahl von Zyklen überspringt, ohne auf den Speicher zuzugreifen. Die vorgegebene Anzahl überspringbarer Zyklen kann in einfacher Weise von der DP-Anwendung als Parameter in ein Register der Überwachungseinrichtung eingeschrieben werden.

Als weitere Möglichkeit kann die Überwachungseinrichtung durch Vorgabe eines Parameters einstellbar ausgebildet sein, der den minimalen Abstand des Beginns eines Zugriffs oder den minimalen Abstand des Endes eines Zugriffs der Recheneinheit auf den Speicher zum Zyklusende in einem Zyklus bestimmt. Die Überwachungseinheit gibt dann ein Signal zur Anzeige einer schlechten Qualität der Zugriffssynchronisation aus, wenn dieser Abstand durch einen im Betrieb des Kommunikationsprozessors ermittelten Abstand unterschritten wird. Das hat den Vorteil, dass die Überwachungseinrichtung in der Lage ist, ständig die Qualität der Zugriffssynchronisation zwischen der DP-Anwendung und dem äquidistanten Buszyklus zu überwachen. Bei Unterschreitung einer projektierbaren Mindestqualität, die durch den Parameter minimaler Abstand des Beginns bzw. des Endes eines Zyklus zum Zyklusende entspricht, wird eine dies anzeigende Fehlermeldung an die DP-Anwendung durch die Überwachungseinrichtung ausgelöst und vom Kommunikationsprozessor ausgegeben. Dadurch können gewisse Fehlersituationen präventiv erkannt werden, wenn sich die Ablaufbedingungen einer DP-Anwendung beispielsweise durch externe Einflüsse ändern. Als Beispiel sei eine Konfigurationsänderung eines PC genannt, durch welche sich das Timing einer DP-Anwendung, die bisher problemlos mit guter Qualität der Zugriffssynchronisation lief, erheblich verschlechtern kann, so dass sich die Gefahr von Zugriffsverletzungen einstellt. Durch die Ermittlung der Qualität der Zugriffssynchronisation können diese Tendenzen rechtzeitig erkannt und geeignete Gegenmaßnahmen getroffen werden.

In einer Weiterbildung der Erfindung kann die Überwachungseinrichtung gemeinsam mit einer Schnittstellensteuereinrichtung, einem so genannten Schnittstellen-Controller, in einem intergrierten Schaltkreis, einem so genannten ASIC, enthalten sein. Das hat den Vorteil, dass die Leistungsfähigkeit, beispielsweise aufgrund der kürzeren Signalwege, gesteigert und der Aufwand der Realisierung eines Kommunikationsprozessors verringert wird. Selbstverständlich kann die Überwachungseinrichtung in einem Kommunikationsprozessor auch getrennt vom Schnittstellen-Controller implementiert werden.

Anhand der Zeichnungen, in denen ein Ausführungsbeispiel der Erfindung dargestellt ist, werden im Folgenden die Erfindung sowie Ausgetaltungen und Vorteile näher erläutert.

Es zeigen:
- Figur 1: ein Blockschaltbild eines Netzwerks mit mehreren Teilnehmern,
- Figur 2: ein Zeitdiagramm zur Erläuterung des Äquidistanzbetriebs bei PROFIBUS DP (Stand der Technik),
- Figur 3: eine Überwachungseinrichtung mit ihren Ein/Ausgabesignalen,
- Figur 4: ein Signalflussbild zur Erläuterung des Zusammenspiels der Komponenten eines Teilnehmers,
- Figuren 5 u. 6: Zeitdiagramme zur Erläuterung des Zusammenspiels im fehlerfreien Fall,
- Figuren 7, 8 u. 9: Zeitdiagramme zur Erläuterung des Zusammenspiels in Fehlerfällen.

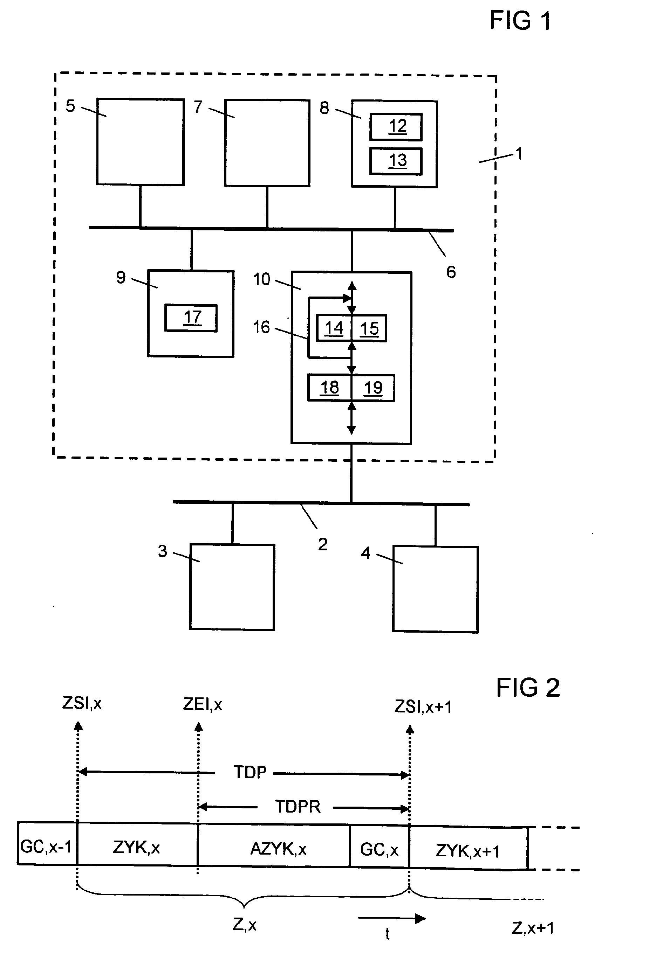

In Figur 1 ist eine einfache automatisierungstechnische Anlage zur Steuerung eines Prozesses dargestellt, die einen Personal Computer 1 und einen daran angeschlossenen Feldbus 2, der als PROFIBUS DP ausgeführt ist, mit einem Sensor 3 und einem Aktuator 4 aufweist. Der Personal Computer enthält einen Prozessor 5, der über einen PCI-Bus 6 mit einem Arbeitsspeicher 7, einem Programmspeicher 8 und einem Laufwerk 9 verbunden ist. Weitere Komponenten des Personal Computers sind der Übersichtlichkeit wegen nicht dargestellt. Auf dem Personal Computer ist ein Betriebssystem, beispielsweise Windows NT, geladen, das nicht echtzeitfähig ist. Die Schnittstelle zwischen dem Personal Computer 1 und dem Feldbus 2 bildet eine Steckkarte 10, die in den Personal Computer 1 gesteckt und an den PCI-Bus 6 angeschlossen ist. Über diese Steckkarte 10, die auch als Kommunikationsprozessor bezeichnet wird, kann ein Steuerprogramm 12, das als DP-Anwendung im Personal Computer 1 abläuft, Messdaten einlesen, die durch den Sensor 3 am Prozess erfasst werden, und Stellbefehle an den Aktuator 4 ausgeben, der als Stellglied auf den Prozess einwirkt. Dazu werden über den Feldbus 2 Nutzdaten zyklisch zwischen den angeschlossenen Teilnehmern 1, 3 und 4 ausgetauscht. Der Kommunikationsprozessor 10 bildet einen PROFIBUS-DP-Master, der den Sensor 3 und den Aktuator 4, die beide als PROFIBUS-DP-Slaves betrieben werden, zyklisch zu einem Datenaustausch aufruft. Die DP-Anwendung 12 und ein Device-Treiber 13 für den Kommunikationsprozessor 10 sind in den Programmspeicher 8 des Personal Computers 1 geladen. Bei der Installation können die zum Betrieb der Recheneinheit erforderlichen Programme von einem Speichermedium 17, das in das Laufwerk 9 eingesetzt wird, in den Programmspeicher 8 geladen werden. Der Prozessor 5, der gemeinsam mit dem Arbeitsspeicher 7 und dem Programmspeicher 8 eine Recheneinheit bildet, kann über den PCI-Bus 6 auf Speicher 14 und 15 des Kommunikationsprozessors 10 zugreifen, die als Dual-Port-RAM ausgeführt sind und in welchen ein Prozessabbild gehalten wird. Über Interrupts 16 kann der Kommunikationsprozessor 10 Synchronisationssignale an die Recheneinheit ausgeben. Der Kommunikationsprozessor 10 ist mit einer Schnittstellensteuereinrichtung 18, einem so genannten Schnittstellen-Controller, und mit einer Überwachungseinrichtung 19 ausgestattet, die gemeinsam in einem integrierten Schaltkreis, einem so genannten ASIC, angeordnet sind.

Figur 2 zeigt den zeitlichen Aufbau eines Zyklus Z,x im Äquidistanzbetrieb des PROFIBUS DP, der bereits eingangs näher erläutert wurde. Lediglich in einem Zeitabschnitt TDPR, der außerhalb des zyklischen Teils ZYK,x des Zyklus Z,x liegt, dürfen von der Recheneinheit Zugriffe auf das Prozessabbild in den Speichern 14 und 15 durchgeführt werden.

Gemäß Figur 3 erhält eine Überwachungseinrichtung 30 ein Eingabesignal E1, welches den Beginn eines Zugriffs der Recheneinheit auf den Speicher anzeigt, sowie ein Eingangssignal E2, durch welches das Ende des Zugriffs der Recheneinheit auf den Speicher signalisiert wird. Diese Signale werden durch die DP-Anwendung erzeugt und ausgegeben. Die Überwachungseinrichtung 30 liefert ein Ausgabesignal A1, das einen Zugriff der Recheneinheit ohne Zugriffsberechtigung anzeigt, sofern sie einen derartigen Zugriff erkannt hat. Weiterhin liefert die Überwachungseinrichtung 30 ein Ausgabesignal A2 an die DP-Anwendung, wenn das Unterschreiten einer vorgegebenen Qualität der Zugriffssynchronisation durch die Überwachungseinrichtung festgestellt wurde. Durch die DP-Anwendung kann der Überwachungseinrichtung 30 ein Parameter P1 vorgegeben werden, der den gewünschten minimalen Abstand des Beginns eines Zugriffs der Recheneinheit auf den Speicher zum Zyklusende in einem Zyklus bestimmt. Mit einem weiteren Parameter P2 wird der gewünschte minimale Abstand des Endes eines Zugriffs zum Zyklusende vorgegeben. Durch die beiden Parameter P1 und P2 wird festgelegt, bei welcher Schwelle zwischen einer guten und einer schlechten Qualität der Zugriffssynchronisation unterschieden wird. Entsprechend dem Ergebnis des Schwellwertvergleichs während des Betriebs des Kommunikationsprozessors wird das Ausgabesignal A2 zur Anzeige einer schlechten Qualität der Zugriffssynchronisation gesetzt oder nicht. Ein ebenfalls von der DP-Anwendung vorgegebener Parameter P3 legt die zulässige Zahl der Zyklen fest, die zwischen einem ersten Synchronisationssignal und dem ersten darauf folgenden Zugriff der Recheneinheit auf den Speicher liegen darf. Dadurch können DP-Anwendungen flexibel gestaltet werden: Soll z.B. eine DP-Anwendung aus regelungstechnischen Gründen nur jeden zweiten Zyklus auf den Speicher zugreifen, so muss in der Überwachungseinrichtung 30 durch entsprechende Vorgabe des Parameters P3 eingestellt werden, dass ein Zyklus übersprungen werden darf. Mit einem Parameter P4 wird durch die DP-Anwendung eingestellt, wie sich die Überwachungseinrichtung 30 bei Erkennen eines unzulässigen Zugriffs auf den Speicher verhalten soll. Beispielsweise werden, wenn der Parameter P4 gesetzt wurde, nach Erkennen eines Zugriffs ohne Zugriffsberechtigung durch die Überwachungseinrichtung 30 alle nachfolgenden Schreibzugriffe der Recheneinheit auf das Prozessabbild im Speicher durch die Überwachungseinrichtung 30 gesperrt. Dadurch sind Fehlzugriffe außerhalb des azyklischen Teils des äquidistanten Buszyklus unmöglich. Durch Rücksetzen des Parameters P4 kann dieses Verhalten auf Wunsch deaktiviert werden. Von dem Schnittstellen-Controller erhält die Überwachungseinrichtung 30 mehrere verschiedene Zustands- und Zeitinformationen X bezüglich des äquidistanten Buszyklus. Beispiele für derartige Informationen sind ein Signal zur Kennzeichnung des Beginns des zyklischen Teils sowie ein Signal zur Kennzeichnung des Beginns des azyklischen Teils eines Zyklus. In einer technischen Implementierung der Überwachungseinrichtung 30 können die Signale z.B. in einem Register zwischengespeichert oder durch Ein-/Ausgabeschaltungen realisiert werden. Die Ausgabesignale A1 und A2, mit welchen Fehlerzustände einer DP-Anwendung angezeigt werden können, sind ebenso durch Fehlerzähler oder als Fehlerinterrupts ausführbar.

In Figur 4 ist das Zusammenspiel der einzelnen, zum Teil durch Software realisierten Instanzen dargestellt. Der Kommunikationsprozessor 10 gibt während eines Zyklus einen Zyklus-Ende-Interrupt entsprechend einem Pfeil 33 an eine Device-Treiber-Instanz 31 aus. Die Device-Treiber-Instanz 31 wird durch Abarbeiten z.B. des unter Windows NT als Programm ablauffähigen Device-Treibers 13 realisiert. Dieser Zyklus-Ende-Interrupt zeigt der DP-Anwendung, die durch einen DP-Bearbeitungs-Thread 32 ausgeführt wird, den Beginn des azyklischen Teils eines äquidistanten Buszyklus an, wie es durch einen Pfeil 34 angedeutet ist. Durch Setzen eines Start-Flags entsprechend einem Pfeil 36 signalisiert die DP-Anwendung dem Kommunikationsprozessor 10 den Beginn eines Zugriffs der Recheneinheit auf das Prozessabbild im Speicher. Durch Setzen eines Ende-Flags gemäß einem Pfeil 37 zeigt die DP-Anwendung dem Kommunikationsprozessor 10 das Ende des Zugriffs der Recheneinheit auf das Prozessabbild an. Anhand der Zeitpunkte des Setzens der beiden Flags kann die Überwachungseinrichtung im Kommunikationsprozessor 10 erkennen, ob Zugriffsverletzungen vorliegen oder ob eine vorgegebene Mindestqualität der Zugriffssynchronisation unterschritten wurde. In beiden Fällen informiert der Kommunikationsprozessor den DP-Bearbeitungs-Thread 32 über den jeweiligen Fehler. Nach einem Zyklus-Ende-Interrupt wird der DP-Bearbeitungs-Thread 32 durch die Device-Treiber-Instanz 31 entsprechend einem Pfeil 34 aktiviert. Diese Aktivierung kann beispielsweise durch Setzen einer gemeinsamen Windows-Semaphore erfolgen, an welcher der DP-Bearbeitungs-Thread 32 jeweils nach Durchlaufen einer Regelschleife wartet. Selbstverständlich sind alternativ zur Windows-Semaphore auch andere Methoden zur Synchronisation programmtechnisch realisierter Instanzen anwendbar. Nach seiner Aktivierung greift der DP-Bearbeitungs-Thread 32 beispielsweise zur Bearbeitung eines Regelalgorithmus auf ein in einem Speicherbereich eines Dual-Port-RAM des Kommunikationsprozessors 10 gehaltenes Prozessabbild zum Einlesen der Messdaten und Ausgeben der damit berechneten Steuerdaten zu. Anschließend wartet der DP-Bearbeitungs-Thread 32 auf das Ausgeben des Zyklus-Ende-Interrupts im darauf folgenden Zyklus. Dieser schleifenförmige Durchlauf ist im DP-Bearbeitungs-Thread 32 durch eine unterbrochene, mit Pfeilen gezeichnete Schleife symbolisch dargestellt.

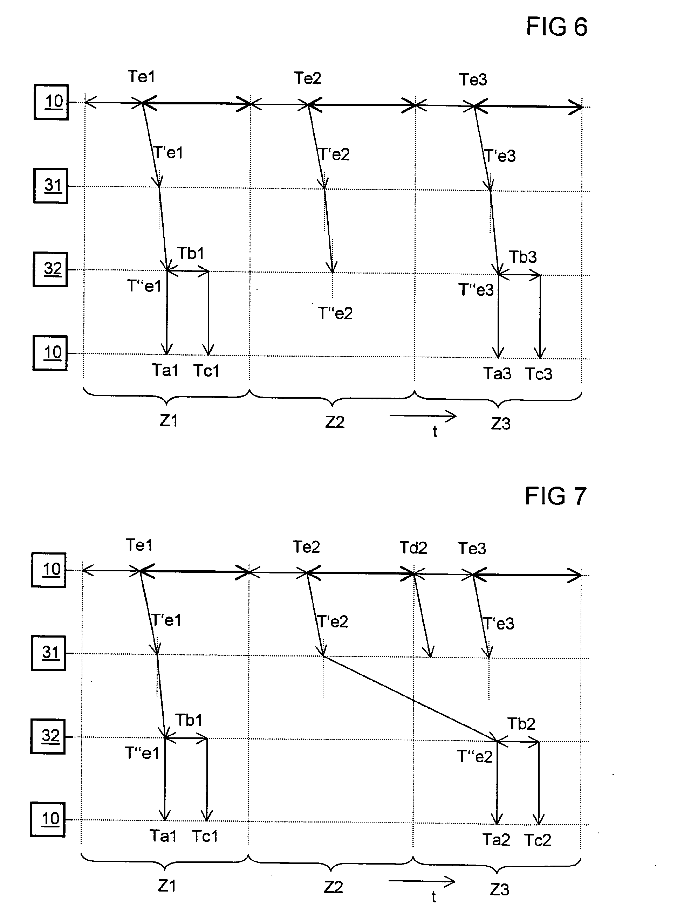

Die Zeitdiagramme in den Figuren 5 und 6 zeigen jeweils anhand von drei aufeinander folgenden Zyklen für den fehlerfreien Fall und die Zeitdiagramme in den Figuren 7 bis 9 für typische Fehlersituationen, wie Zugriffsverletzungen oder schlechte Qualität der Zugriffssynchronisation erkannt werden und wie der DP-Bearbeitungs-Thread 32, die Device-Treiber-Instanz 31 und der Kommunikationsprozessor 10 im Detail zusammenspielen. Durch die Lage der Pfeile in den verschiedenen horizontalen Ebenen sind die an den jeweiligen Aktionen beteiligten Komponenten bestimmt. Wegen der schleifenförmigen Grundstruktur des Ablaufs sind einer Komponente, hier dem Kommunikationsprozessor 10, zur übersichtlichen Darstellung zwei Ebenen zugeordnet. Eine Zeitachse t verläuft jeweils von der linken zur rechten Seite der Darstellungen. Die Zyklen Z1, Z2 und Z3 werden der Anschaulichkeit wegen nur durch die Zeitpunkte Te1, Te2 bzw. Te3 ihrer Zyklus-Ende-Interrupts repräsentiert. Der azyklische Teil eines Zyklus ist jeweils durch einen fettgezeichneten Doppelpfeil angedeutet, der zyklische Teil durch einen dünner eingezeichneten Doppelpfeil.

In Figur 5 ist der folgende Ablauf dargestellt. Der Kommunikationsprozessor 10 löst zu den Zeitpunkten Te1, Te2 und Te3 jeweils einen Zyklus-Ende-Interrupt aus. Bedingt durch Laufzeiten in PC werden diese Interrupts zeitverzögert an die Device-Treiber-Instanz 31 gemeldet. Die Zeitpunkte des Eintreffens der Meldungen sind in Figur 5 mit T'e1, T'e2 bzw. T'e3 bezeichnet. Jeweils zu diesen Zeitpunkten, an welchen die Zyklus-Ende-Interrupts der Zyklen Z1, Z2 bzw. Z3 bei der Device-Treiber-Instanz 31 eintreffen, aktiviert diese den wartenden DP-Bearbeitungs-Thread 32, beispielsweise durch Setzen einer gemeinsamen Windows-Semaphore. Bedingt durch die Programmlaufzeiten im PC erfolgt diese Aktivierung ebenfalls mit einer gewissen Zeitverzögerung zu den Zeitpunkten T''e1, T''e2 und T''e3. Der DP-Bearbeitungs-Thread 32 führt danach nachstehende Aktionen durch:
1. zu Zeitpunkten Ta1, Ta2 und Ta3 in den Zyklen Z1, Z2 bzw. Z3 wird durch den DP-Bearbeitungs-Thread 32 ein Start-Flag gesetzt und somit durch ein Eingabesignal E1 der Überwachungseinrichtung im Kommunikationsprozessor 10 der Beginn eines Zugriffs auf das Prozessabbild in Dual-Port-RAM angezeigt,
2. der DP-Bearbeitungs-Thread 32 greift während Zeitintervallen Tb1, Tb2 und Tb3 auf das Prozessabbild im Dual-Port-RAM des Kommunikationsprozessors 10 zu, um Eingabedaten der an den Feldbus angeschlossenen Slaves zu lesen, diese entsprechend seinem Regelalgorithmus auszuwerten und neue Ausgabedaten einzuschreiben, und
3. durch den DP-Bearbeitungs-Thread 32 wird zu Zeitpunkten Tc1, Tc2 und Tc3 ein Ende-Flag gesetzt und somit der Überwachungseinrichtung das Ende eines Zugriffs der Recheneinheit auf den Speicher angezeigt.

Wie deutlich erkennbar ist, liegen alle Zugriffe der Recheneinheit auf den Speicher im azyklischen Teil der Zyklen. Zudem überspringt die DP-Anwendung keinen Zyklus. Die Überwachungseinrichtung setzt daher in diesem Fall kein Signal A1 zur Anzeige eines Fehlers.

Figur 6 zeigt ein weiteres Zeitdiagramm mit drei Zyklen Z1, Z2 und Z3. Der Ablauf ist ähnlich dem bereits in Figur 5 gezeigten. Gleiche Teile sind mit gleichen Bezugszeichen versehen. Ein Unterschied zwischen den beiden Abläufen besteht darin, dass im Zyklus Z2 kein Zugriff des DP-Bearbeitungs-Thread 32 auf das Prozessabbild im Dual-Port-RAM des Kommunikationsprozessors 10 erfolgt. Infolgedessen wird auch kein Start-Flag und kein Ende-Flag im Zyklus Z2 gesetzt. Alle Zugriffe der Recheneinheit auf den Speicher liegen im azyklischen Teil des äquidistanten Buszyklus. Es soll davon ausgegangen werden, dass der Parameter P3, der die Zahl der vom DP-Bearbeitungs-Thread überspringbaren Zyklen bestimmt, auf den Wert 1 gesetzt wurde. Somit ist das Überspringen des Zyklus Z2 in der gezeigten Weise zulässig und die Überwachungseinrichtung im Kommunikationsprozessor 10 sendet auch bei dem in Figur 6 gezeigten Ablauf kein Signal zur Anzeige einer Zugriffsverletzung.

Figur 7 zeigt einen weiteren Ablauf, in welchem wiederum alle Zugriffe der Recheneinheit auf den Speicher im azyklischen Teil des äquidistanten Buszyklus liegen. Bei diesem Beispiel soll nun von der Voraussetzung ausgegangen werden, dass der Parameter P3 auf Null gesetzt wurde, d.h. kein Zyklus vom DP-Bearbeitungs-Thread 32 übersprungen werden darf. Aufgrund eines Laufzeiteffekts in der DP-Anwendung erfolgt der Zugriff des DP-Bearbeitungs-Threads 32 als Reaktion auf den Zyklus-Ende-Interrupt zum Zeitpunkt T'e2 im Zyklus Z2 jedoch erst im darauf folgenden Zyklus Z3 zu einem Zeitpunkt T''e2. Die Überwachungseinrichtung im Kommunikationsprozessor 10 erkennt das Überspringen eines Zyklus durch die DP-Anwendung am Ende des Zyklus Z2, in welchem durch den DP-Bearbeitungs-Thread 32 nicht auf das Dual-Port-RAM zugegriffen wurde. Um dies zu ermöglichen, kann der Überwachungseinrichtung beispielsweise der Beginn eines zyklischen Teils eines äquidistanten Buszyklus innerhalb des Kommunikationsprozessors mitgeteilt werden. Die erkannte Zugriffsverletzung wird von der Überwachungseinrichtung durch Setzen des Ausgabesignals A1 zu einem Zeitpunkt Td2 gemeldet.

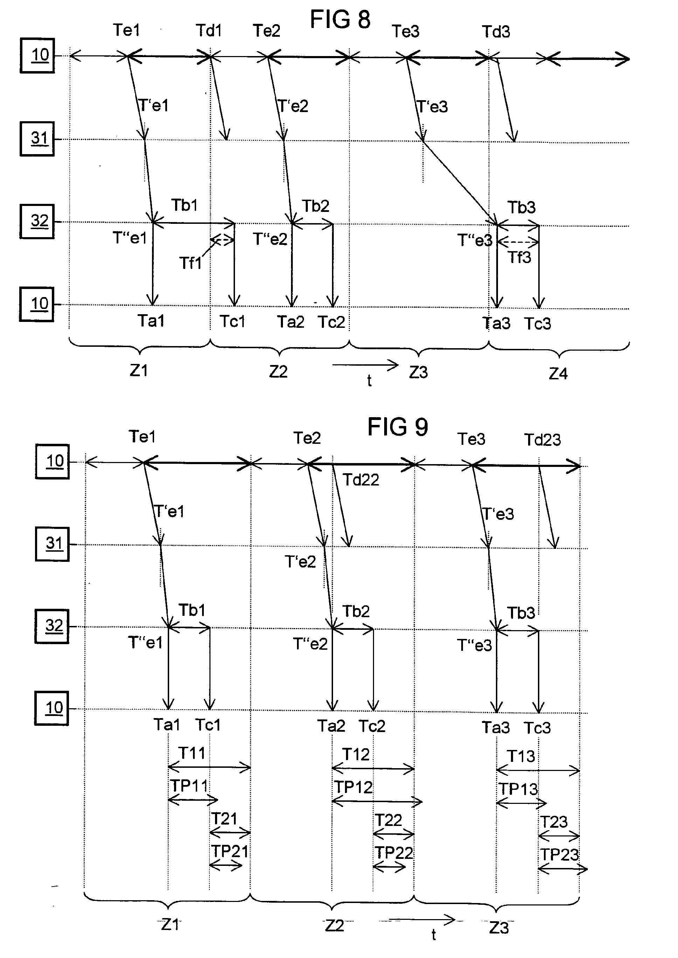

Figur 8 zeigt ein Zeitdiagramm mit Zyklen Z1 bis Z4. Hier werden die beiden Fälle verdeutlicht, in welchen ein Zugriff der DP-Anwendung teilweise oder vollständig außerhalb des zulässigen Bereichs liegt. Es soll angenommen werden, dass der Parameter P3 auf den Wert 1 gesetzt wurde, also dass ein Zyklus bei Zugriffen des DP-Bearbeitungs-Threads 32 auf das Dual-Port-RAM übersprungen werden darf. In dem Beispiel gemäß Figur 8 wird ein erster Fehler durch die Überwachungseinheit zu einem Zeitpunkt Td1 gemeldet, zu welchem diese erkennt, dass der Zeitraum Tb1, in welchem der DP-Bearbeitungs-Thread 32 auf das Dual-Port-RAM zugreift, nicht vor dem Ende des Zyklus Z1 abgeschlossen wurde sondern in den Zyklus Z2 hineinragt. Dieser Fehler wird zum Zeitpunkt Td1, der beim Ende des azyklischen Teils des Zyklus Z1 liegt, durch Setzen des Ausgabesignals A1 angezeigt. In dem mit einem durchbrochenen Doppelpfeil angedeuteten Zeitbereich Tf1 werden keine Schreibzugriffe auf das Dual-Port-RAM übernommen, sofern der Parameter P4 zuvor durch die DP-Anwendung gesetzt wurde. Ein weiterer Fehler wird zum Zeitpunkt Td3 durch die Überwachungseinrichtung erkannt und durch Setzen des Ausgabesignals A1 angezeigt, da der auf den Zyklus-Ende-Interrupt zu einem Zeitpunkt Te3 folgende Zugriff der Recheneinheit auf den Speicher vollständig innerhalb des auf den Zyklus Z3 folgenden zyklischen Teils des Zyklus Z4 liegt. Der Zeitpunkt Td3 der Fehleranzeige liegt hier bereits beim Zeitpunkt Ta3, da hier durch die Überwachungseinrichtung festgestellt werden konnte, dass der DP-Bearbeitungs-Thread 32 innerhalb des zyklischen Teils des Zyklus 4, in welchem Zugriffe nicht erlaubt sind, auf das Dual-Port-RAM zugreift. Dabei soll davon ausgegangen werden, dass der Parameter P3 auf eins gesetzt ist. In dem mit einem durchbrochenen Doppelpfeil angedeuteten Zeitbereich Tf3 werden wiederum keine Zugriffe auf das Dual-Port-RAM übernommen, sofern der Parameter P4 gesetzt ist.

Das in Figur 9 dargestellte Zeitdiagramm soll zur näheren Erläuterung des Erkennens einer Verringerung der Qualität der Zugriffssynchronisation dienen. Als Basis dient der bereits an Figur 5 erläuterte Ablauf, der zu keiner Anzeige eines Zugriffs ohne Zugriffsberechtigung führt. Gleiche Teile sind wiederum mit gleichen Bezugszeichen versehen. Bei gleichbleibender Lage der Zugriffe der Recheneinheit auf den Speicher innerhalb der Zyklen Z1, Z2 und Z3 werden jeweils unterschiedliche Parametrierungen der Überwachungseinrichtung durch Vorgabe verschiedener Parameter P1 und P2 betrachtet. In Zyklus Z1 wird ein minimaler Abstand TP11 des Zugriffsbeginns zum Zyklusende durch die DP-Anwendung vorgegeben, der geringer ist als der ermittelte Abstand T11. Der Beginn des Zugriffs der Recheneinheit auf den Speicher wird durch den Zeitpunkt Ta1 markiert. Weiterhin wird ein minimaler Abstand TP21 des Endes des Zugriffs, das beim Zeitpunkt Tc1 liegt, zum Zyklusende vorgegeben, der von einem ermittelten Abstand T21 nicht unterschritten wird. In Zyklus Z1 wird daher durch die Überwachungseinrichtung keine schlechte Qualität der Zugriffssynchronisation angezeigt. Die Überwachung der Qualität kann in der Weise erfolgen, dass die Überwachungseinrichtung beim Zeitpunkt Ta1, bei welchem die DP-Anwendung das Start-Flag setzt, die restliche Dauer des azyklischen Teils des jeweiligen Zyklus ermittelt, die dem tatsächlichen Abstand des Zugriffsbeginns zum Zyklusende entspricht. Dieser Wert wird mit dem parametrierten Mindestabstand verglichen. Eine schlechte Qualität der Zugriffssynchronisation liegt dann vor, wenn die Differenz aus ermitteltem Abstand und Mindestabstand kleiner als Null ist. Ebenso kann die Überwachung zum Zeitpunkt Tc1 erfolgen, der das Ende des Zugriffs der Recheneinheit auf den Speicher markiert. Im Zyklus Z2 wird von einem größeren Wert als Parameter P1 ausgegangen. Der vorgegebene Mindestabstand ist in Figur 9 als Zeitdauer TP12 eingezeichnet. Der ermittelte Abstand T12 ist nun geringer als der parametrierte Mindestabstand TP12. Dies wird durch die Überwachungseinrichtung im Kommunikationsprozessor 10 zu einem Zeitpunkt Td22 erkannt und durch Setzen des Ausgabesignals A2 angezeigt. Der DP-Anwendung wurde somit eine schlechte Qualität der Zugriffssynchronisation gemeldet, so dass frühzeitig geeignete Maßnahmen zu ihrer Verbesserung getroffen werden können. In Zyklus Z3 wurde dagegen der parametrierte zeitliche Abstand TP13 durch den ermittelten Abstand T13 des Zugriffsbeginns zum Zyklusende eingehalten. Jedoch wird nun ein minimaler Abstand TP23 als Wert des Parameters P2 vorgegeben, der von dem ermittelten Abstand T23 unterschritten wird. Zu einem Zeitpunkt Td23 wird dies von der Überwachungseinrichtung erkannt und durch Setzen des Ausgabesignals A2 wird eine schlechte Qualität der Zugriffssynchronisation der DP-Anwendung angezeigt.

Die beschriebene Erkennung und Anzeige von Zugriffsverletzungen in Netzwerkteilnehmern lässt sich grundsätzlich neben der als Ausführungsbeispiel beschriebenen Anwendung bei PROFIBUS auch bei anderen Kommunikationssystemen, die beispielsweise bei Antriebssteuerungen mit Echtzeitübertragung Verwendung finden können, einsetzen. Dazu müssen lediglich die Bedingungen erfüllt sein, dass die Datenübertragung mit gleichlangen, d.h. äquidistanten Zyklen erfolgt und dass diese Zyklen aus einem zyklischen Teil für die Übertragung der Daten in Echtzeit und einem azyklischen Teil für weniger zeitkritische Daten bestehen. Beispielsweise ist die Erfindung auch bei schaltbaren Hochleistungsdatennetzen, insbesondere Ethernet, anwendbar. Dort ist zwischen zwei Teilnehmern jeweils mindestens eine Koppeleinheit geschaltet, die mit beiden Teilnehmern verbunden ist. Jede Koppeleinheit kann mit mehr als zwei Teilnehmern verbunden sein. Jeder Teilnehmer ist mit mindestens einer Koppeleinheit aber nicht direkt mit einem anderen Teilnehmer verbunden. Teilnehmer sind beispielsweise Computer, speicherprogrammierbare Steuerungen, Feldgeräte oder andere Maschinen, die elektronische Daten mit anderen Teilnehmern austauschen. Im Gegensatz zu Bussystemen, bei denen jeder Teilnehmer jeden anderen Teilnehmer des Datennetzes direkt über den Datenbus erreichen kann, handelt es sich bei den schaltbaren Datennetzen ausschließlich um Punkt zu Punkt Verbindungen, d.h. ein Teilnehmer kann einen anderen Teilnehmer des schaltbaren Datennetzes nur indirekt durch Weiterleitung der zu übertragenden Daten mittels einer oder mehrerer Koppeleinheiten erreichen. Auch bei diesen schaltbaren Datennetzen kann eine Unterteilung der Übertragungszyklen in jeweils einen zyklischen und einen azyklischen Teil erfolgen, so dass die Erfindung auch bei diesen Datennetzen ohne Weiteres anwendbar ist.

## Patentansprüche

1. Teilnehmer für ein Netzwerk mit einer Datenübertragung in äquidistanten Zyklen, insbesondere für ein Netzwerk nach der PROFIBUS-DP-Spezifikation, der einen Kommunikationsprozessor (10) aufweist, der die zyklische Datenübertragung durchführt, indem er in einem zyklischen Teil (ZYK,x) des Zyklus (Z,x) Daten aus einem Speicher (15) ausliest und an andere Teilnehmer (4) sendet und/oder Daten von anderen Teilnehmern (3) empfängt und in einen Speicher (14) einschreibt, wobei der Teilnehmer (1) weiterhin eine Recheneinheit (5, 7, 8) aufweist, die auf den Speicher (14, 15) zugreifen kann, und wobei der Kommunikationsprozessor (10) zumindest ein erstes Synchronisationssignal (16) jeweils zu einem festen Zeitpunkt (Te1, Te2, Te3) eines Zyklus (Z1, Z2, Z3) an die Recheneinheit sendet, **dadurch gekennzeichnet,**
**dass** der Kommunikationsprozessor (10) eine Überwachungseinrichtung (19) zur Überwachung der Zugriffe der Recheneinheit auf den Speicher aufweist, und
**dass** die Überwachungseinrichtung derart ausgebildet ist, dass sie anhand des Beginns und des Endes eines Zugriffs der Recheneinheit auf den Speicher und anhand deren zeitlicher Lage (Ta1, Tc1) innerhalb der Zyklen (Z1) einen Zugriff ohne Zugriffsberechtigung oder einen Zugriffsfehler erkennt und zumindest ein Signal (A1) zu deren Anzeige erzeugt.

2. Teilnehmer nach Anspruch 1, **dadurch gekennzeichnet,dass** der Kommunikationsprozessor (10) das erste Synchronisationssignal (16) durch Ausgabe eines Interrupts (ZEI,x) an die Recheneinheit zum Ende des zyklischen Teils (ZYK,x) eines Zyklus (Z,x) sendet.

3. Teilnehmer nach Anspruch 1 oder 2, **dadurch gekennzeichnet,dass** die Recheneinheit der Überwachungseinrichtung den Beginn eines Zugriffs auf den Speicher durch ein zweites Signal (E1), insbesondere durch Setzen eines Start-Flags, und das Ende eines Zugriffs auf den Speicher durch ein drittes Signal (E2), insbesondere durch Setzen eines Ende-Flags, anzeigt.

4. Teilnehmer nach einem der vorhergehenden Ansprüche, **dadurch gekennzeichnet, dass** die Überwachungseinrichtung durch Vorgabe eines Parameters (P3) einstellbar ist, der die zulässige Zahl der Zyklen bestimmt, die zwischen Senden des ersten Synchronisationssignals und dem ersten darauf folgenden Zugriff der Recheneinheit auf den Speicher liegen darf, und dass die Überwachungseinrichtung ein Signal (A1) zur Anzeige eines Fehlers erzeugt, wenn diese Zahl durch eine ermittelte überschritten wird.

5. Teilnehmer nach einem der vorhergehenden Ansprüche, **dadurch gekennzeichnet, dass** die Überwachungseinrichtung durch Vorgabe eines Parameters (P1) einstellbar ist, der den minimalen Abstand (TP11) des Beginns eines Zugriffs der Recheneinheit auf den Speicher zum Zyklusende in einem Zyklus (Z1) bestimmt, und dass die Überwachungseinrichtung ein Signal (A2) zur Anzeige einer schlechten Qualität der Zugriffssynchronisation erzeugt, wenn dieser Abstand durch einen ermittelten unterschritten wird.

6. Teilnehmer nach einem der vorhergehenden Ansprüche, **dadurch gekennzeichnet, dass** die Überwachungseinrichtung durch Vorgabe eines Parameters (P2) einstellbar ist, der den minimalen Abstand (TP21) des Endes eines Zugriffs der Recheneinheit auf den Speicher zum Zyklusende in einen Zyklus (Z1) bestimmt, und dass die Überwachungseinrichtung ein Signal (A2) zur Anzeige einer schlechten Qualität der Zugriffssynchronisation erzeugt, wenn dieser Abstand durch einen ermittelten unterschritten wird.

7. Teilnehmer nach einem der vorhergehenden Ansprüche, **dadurch gekennzeichnet, dass** die Überwachungseinrichtung (19) gemeinsam mit einer Schnittstellensteuereinrichtung (18), einem so genannten Schnittstellen-Controller, in einem integrierten Schaltkreis, einem so genannten ASIC, enthalten ist.
